Europäisches Patentamt

European Patent Office

Office européen des brevets

(11) Veröffentlichungsnummer: **0 121 771**
A1

(12) # EUROPÄISCHE PATENTANMELDUNG

(21) Anmeldenummer: 84102406.0

(51) Int. Cl.³: **H 01 M 2/16, H 01 M 2/18**

(22) Anmeldetag: 07.03.84

(30) Priorität: 16.03.83 DE 8307549 U

(43) Veröffentlichungstag der Anmeldung: 17.10.84
Patentblatt 84/42

(84) Benannte Vertragsstaaten: **AT DE FR GB IT LU**

(71) Anmelder: **Grace GmbH, Erlengang 31, D-2000 Norderstedt (DE)**

(72) Erfinder: **Böhnstedt, Werner, Wacholderweg 43, D-2359 Henstedt-Ulzburg 3 (DE)**

(74) Vertreter: **UEXKÜLL & STOLBERG Patentanwälte, Beselerstrasse 4, D-2000 Hamburg 52 (DE)**

(54) Separator für Bleiakkumulatoren.

(57) Es wird ein versteifter mikroporöser Separator für Blei-akkumulatoren zum Einsatz als Starterbatterien, bestehend aus mindestens einem mittels säurefester Bindemittel form-stabil gemachten Glasfaservlies (1, 11), wobei das Glasfa-servlies (1, 11) mindestens auf einer Seite über seine gesamte Fläche mit einer mikroporösen Kunststoffschicht (2, 12) aus einem Polyolefin mit einem Porendurchmesser von weniger als 3 µm fest verbunden ist. Das Verbinden kann durch Verpressen unter Druck bei erhöhter Temperatur und gleichzeitiger Einbettung des Glasfaservlieses (1, 11) in das Kunststoffmaterial oder mit Hilfe eines säurefesten Kleb-stoffes (3) erfolgen. Der erfindungsgemäße Separator verei-nigt in sich die Vorteile eines bekannten Separators aus Glasfasern mit denen des Kunststoffmaterials, so daß ein Separator erhalten wird, der elektrisch und mechanisch die höchsten Ansprüche erfüllt.

Grace GmbH
Erlengang 31
2000 Norderstedt

(G 83 07 549.6
16.3.1983)
März 1984 (20615)

## Separator für Bleiakkumulatoren

Die Erfindung betrifft einen versteiften mikroporösen Separator für Bleiakkumulatoren mit positiven und negativen Elektrodenplatten, welche als Starterbatterien in Kraftfahrzeugen eingesetzt werden.

Die entgegengesetzt geladenen Elektrodenplatten in einem Bleiakkumulator müssen zur Vermeidung von Kurzschlüssen voneinander getrennt gehalten werden. Zu diesem Zweck werden zwischen die Elektrodenplatten Separatoren (Batteriescheider) eingelegt, welche für den Elektrolyten und damit den ionischen Stromtransport durchlässig, für Dendritenwachstum aber undurchlässig sein müssen. Zur Herstellung von Batteriescheidern sind die unterschiedlichsten Materialien eingesetzt worden, doch fehlt bis heute ein Separator, der die verschiedenen, sich zum Teil widersprechenden Anforderungen vollständig erfüllt.

Im wesentlichen sollte ein Separator folgende Eigenschaften besitzen:

1. Einen niedrigen elektrischen Widerstand von weniger als 130 $m\Omega \cdot cm^2$, vorzugsweise weniger als 70 $m\Omega \cdot cm^2$.

2. Mikroporosität, d.h. einen Porendurchmesser von weniger als 3 $\mu m$, insbesondere um ein Durchwachsen von Blei-Dendriten durch den Batteriescheider zu verhindern.

3. Ausreichende Steifigkeit und Bruchfestigkeit, insbesondere an den Kanten und Ecken, so daß Pakete aus Elektrodenplatten mit dazwischenliegenden Separatoren gestapelt und die Separatoren u.a. durch Aufstoßen auf die Kanten ausgerichtet werden können.

4.  Chemische Beständigkeit, insbesondere gegen die Batteriesäure sowie die in einem Bleiakkumulator auftretenden oxidativen Bedingungen.

5.  Wirtschaftliche Herstellbarkeit aufgrund preiswerter Rohstoffe und eines einfachen Produktionsverfahrens.

Keiner der bislang bekannten Separatoren weist alle vorstehend aufgezählten Eigenschaften auf. Die seit langem bekannten, besonders preiswerten phenolharzgetränkten Zellulosescheider sind weder mikroporös noch besitzen sie einen ausreichend niedrigen elektrischen Widerstand; unter schwierigen Betriebsbedingungen können sie deshalb nicht eingesetzt werden. Die aus mikroporösem Kunststoffmaterial, z.B. Polyethylen hergestellten Scheider sind nicht formstabil und lassen sich daher nicht stapeln und ausrichten, und die aus Resorcin/Formaldehydharzen hergestellten mikroporösen Scheider entsprechen zwar höchsten Qualitätsansprüchen, doch ist ihre Herstellung aufwendig und daher sehr teuer. Die aus kunstharzgebundenen Glasfaservliesen bestehenden Separatoren weisen zwar einen niedrigen elektrischen Widerstand auf und sind auch ausreichend steif, doch sind sie nicht mikroporös, so daß die Gefahr von Durchwachsungen und damit von Kurzschlüssen besteht.

Der Erfindung liegt demgegenüber die Aufgabe zugrunde, einen Separator zu schaffen, der sowohl niedrigen elektrischen Widerstand als auch Mikroporosität besitzt, chemische Beständigkeit und ausreichende mechanische

- 3 -

0121771

Steifigkeit und Festigkeit aufweist, wie sie für die herkömmliche Weiterverarbeitung Voraussetzung ist, und der sich schließlich auch preiswert herstellen läßt.

Gegenstand der Erfindung ist ein versteifter mikroporöser Separator für Bleiakkumulatoren mit positiven und negativen Elektrodenplatten zum Einsatz als Starterbatterien, welcher aus einem mittels säurefester Bindemittel formstabil gemachten Glasfaservlies besteht und dadurch gekennzeichnet ist, daß das Glasfaservlies über seine gesamte Fläche mit einer mikroporösen Kunststoffschicht mit einem Porendurchmesser von weniger als 3 μm fest verbunden ist.

Der neuartige Separator vereinigt in sich die Vorteile eines bekannten Scheiders aus Glasfasern (niedriger elektrischer Widerstand, chemische Beständigkeit und eine für die Weiterverarbeitung ausreichende mechanische Steifigkeit und Bruchfestigkeit) mit denen des Kunststoffmaterials (Flexibilität, Mikroporosität), so daß ein Scheider erhalten wird, der elektrisch und mechanisch die höchsten Ansprüche erfüllt. Gleichzeitig ist auch eine wirtschaftliche Herstellung möglich, da die Produktion auf relativ einfache Weise durchgeführt werden kann.

Gemäß einer bevorzugten Ausführungsform ist das Glasfaservlies mit der mikroporösen Kunststoffschicht durch Verpressen unter Druck bei erhöhter Temperatur verbunden und dadurch zu etwa 5 bis 60% seiner Dicke in das Kunststoffmaterial eingebettet. Die Herstellung des Separators erfolgt in der Weise, daß das bahnförmige Kunststoffmaterial sowie das Glasfaservlies gleichzeitig entsprechenden Kalanderwalzen zugeführt werden, wobei das Kunststoffmaterial auf eine Temperatur in der Nähe von dessen Erweichungstemperatur erhitzt wird.

0121771

Die Verbindung des Glasfaservlieses mit der mikroporösen Kunststoffschicht kann auch in der Weise erfolgen, daß das Vlies mit Hilfe eines säurefesten Klebstoffes mit der Kunststoffschicht unter Anpressen verbunden wird. Gegebenenfalls kann als Klebstoff auch das Bindemittel des Glasfaservlieses dienen, wenn man dieses durch entsprechendes Erwärmen zum Fließen bringt und das Vlies an die Kunststoffschicht anpreßt. Das Bindemittel kann ein Polystyrolharz oder vorzugsweise ein Acrylharz sein.

Das Glasfaservlies weist vorzugsweise eine Schichtdicke von weniger als etwa o,6 mm, beispielsweise eine Dicke von etwa o,25 mm auf. Der durchschnittliche Faserdurchmesser im Glasfaservlies liegt günstigerweise über 1o µm, beispielsweise zwischen 1o und 25 µm, insbesondere bei etwa 2o µm. Ein ausreichender Faserdurchmesser ist wichtig, damit der Batteriescheider insgesamt eine ausreichende Steifigkeit erhält. Die Länge der Fasern sollte vorzugsweise bei durchschnittlich 2o mm oder darüber liegen.

Die Kunststoffschicht weist vorzugsweise eine Schichtdicke von weniger als o.4 mm, beispielsweise eine Dicke von etwa o,2 mm auf. Ein besonders geeignetes Material zur Herstellung der Kunststoffschicht ist Polyethylen mit einem relativ niedrigen Schmelzindex entsprechend einem hohen Molekulargewicht, d.h. einem Schmelzindex in der Nähe von O bei Standardbelastung (Bedingung E nach der ASTM-Norm G 1238/57 T). Vorzugweise enthält der Kunststoff einen feinteiligen porösen anorganischen Füllstoff, insbesondere feinteilige Kieselsäure.

Die erforderliche Mikroporosität erhält das Kunststoffmaterial dadurch, daß man einen festen oder flüssigen Zusatz hochdispers in dem Kunststoff verteilt und anschließend mit einem geeigneten Lösungsmittel extrahiert. Geeignet sind beispielsweise in Wasser lösliche anorganische Salze oder in organischen Lösungsmitteln lösliche Öle, Weichmacher bzw. Füllstoffe. Im einzelnen sind die geeigneten Verfahren zur Herstellung derartiger mikroporöser Kunststoffschichten in der DE-AS 14 96 123 beschrieben, auf deren Inhalt hiermit ausdrücklich verwiesen wird.

Die Herstellung des erfindungsgemäßen Separators kann auch in der Weise erfolgen, daß man zunächst eine Kunststoffbahn extrudiert, welche den löslichen Füllstoff oder Weichmacher hochdispers enthält, und daß man die so erhaltene Bahn mit dem Glasfaservlies wie oben näher erläutert verbindet und erst danach mittels Extraktion des Füllstoffes oder Weichmachers die erforderliche Mikroporosität erzeugt.

Normalerweise wird das Glasfaservlies nur auf einer Seite mit der mikroporösen Kunststoffschicht verbunden, doch ist es auch möglich, auf beide Seiten des Vlieses eine Kunststoffschicht aufzubringen oder umgekehrt auf eine Kunststoffschicht beidseitig ein Glasfaservlies aufzubringen. Bei einem Separator aus nur einem Glasfaservlies mit einer Kunststoffbeschichtung ist normalerweise die Kunststoffschicht auf der jeweils der positiven Elektrodenplatte zugewandten Seite angeordnet.

Auf den erfindungsgemäßen Separator können auf einer oder beiden Seiten, insbesondere aber der jeweils der positiven Elektrodenplatte zugewandten Seite Rippen angeordnet sein, welche für einen Abstand zwischen der Elektrodenplatte und dem Separator sorgen. Solche Rippen können sowohl auf die Kunststoffschicht als auch auf das Glasfaservlies aufgebracht werden. Die Rippen bestehen vorzugsweise aus

0121771

einem geeigneten Kunststoff wie Polyethylen oder
Polyvinylchlorid, der sich mittels Extrusion verarbeiten
läßt.

Zur näheren Erläuterung der Erfindung sollen die beiliegenden Zeichnungen dienen. Es zeigen

Figur 1    eine perspektivische Ansicht eines erfindungsgemäßen Separators (teilweise weggebrochen),

Figur 2    schematisch den Aufbau des Separators der Figur 1
           anhand eines vergrößerten Schnittes,

Figur 3    eine perspektivische Ansicht einer weiteren
           Ausführungsform des erfindungsgemäßen Separators
           (teilweise weggebrochen),

Figur 4    schematisch den Aufbau des Separators der

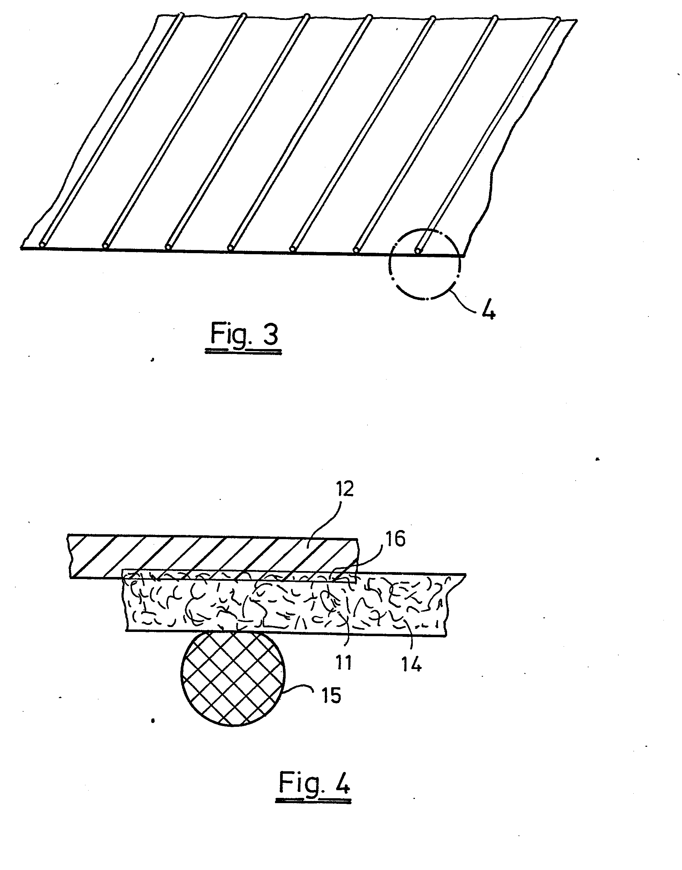

           Figur 3 anhand eines vergrößerten Schnittes.

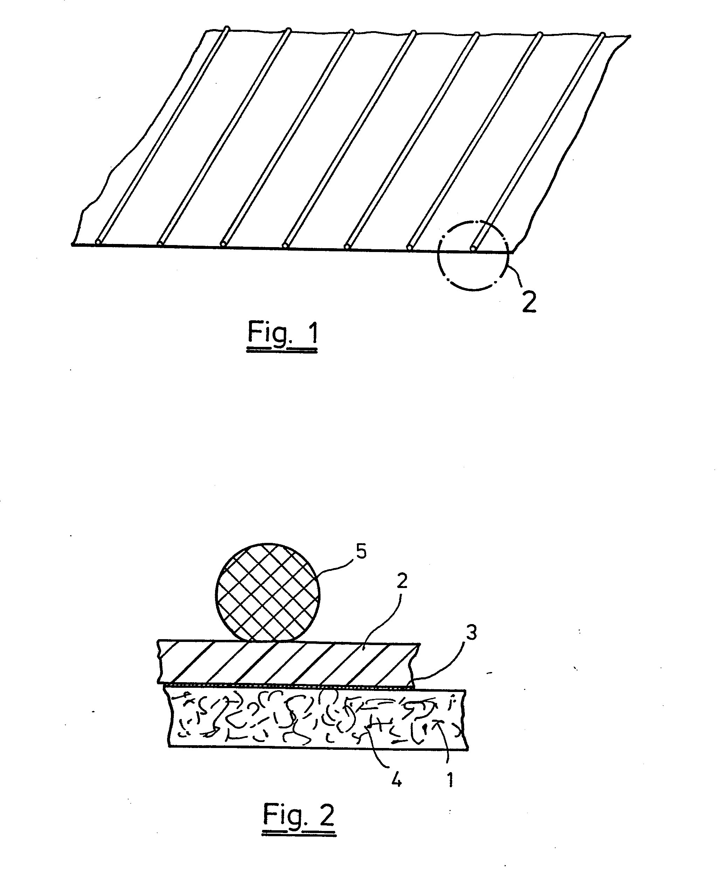

Der Separator der Figur 1 besteht aus einem Glasfaservlies
1, in dem die Glasfasern in der Vliesebene wirr durcheinander liegen und durch ein säurefestes Bindemittel 4
zusammengehalten sind. Eine Kunststoffschicht 2 ist mit
Hilfe eines ebenfalls säurefesten Klebstoffes 3 mit dem
Glasfaservlies fest verbunden. Die Kunststoffschicht ist
mikroporös und weist Poren mit einem Durchmesser von
weniger als 3 µm auf, so daß zwar der Elektrolyt, nicht
aber Feststoffe, insbesondere von den Elektrodenplatten
ausgehende Bleidendriten durchdringen können. Auf die
Kunststoffschicht 2 sind parallel verlaufende Rippen 5
aufgebracht, so daß der Separator nicht direkt an der
jeweils positiven Elektrodenplatte anliegt und damit den
dort auftretenden oxidativen Einflüssen nicht unmittelbar
ausgesetzt ist.

Bei der Ausführungsform der Figur 3 sind das Glasfaservlies 11 und die Kunststoffschicht 12 durch Pressen miteinander verbunden. Bei dieser Herstellungsweise wird die Kunststoffschicht zunächst auf eine Temperatur in der Nähe ihres Erweichungspunktes erwärmt, worauf dann das Glasfaservlies unter Druck (bei Polyethylen z.B. auf 16o bis 18o$^{\circ}$C, aber nicht über 2oo$^{\circ}$C), z.B. mit Hilfe einer Walze, in die Kunststoffschicht hineingepreßt wird, so daß die Glasfasern in dem Bereich 16 in die Kunststoffschicht eindringen. Für diese Arbeitsweise ist es günstig, wenn das Bindemittel 14 des Glasfaservlieses dieselbe oder zumindest eine chemisch nahe verwandte Zusammensetzung wie die Kunststoffschicht 12 aufweist, da auf diese Weise eine besonders homogene Verbindung sichergestellt werden kann.

ugs/Lsch

0121771

## Patentansprüche

1. Versteifter mikroporöser Separator für Bleiakkumulatoren zum Einsatz als Starterbatterien, bestehend aus mindestens einem mittels säurefester Bindemittel formstabil gemachten Glasfaservlies, dadurch gekennzeichnet, daß das Glasfaservlies (1, 11) mindestens auf einer Seite über seine gesamte Fläche mit einer mikroporösen Kunststoffschicht (2, 12) aus einem Polyolefin mit einem Porendurchmesser von weniger als 3 µm fest verbunden ist.

2. Separator nach Anspruch 1, dadurch gekennzeichnet, daß das Glasfaservlies (11) mit der mikroporösen Kunststoffschicht (12) durch Verpressen unter Druck bei erhöhter Temperatur verbunden ist und dadurch zu 5 bis 6o% seiner Schichtdicke in das Kunststoffmaterial eingebettet ist.

0121771

3. Separator nach Anspruch 1, dadurch gekennzeichnet, daß das Glasfaservlies (1) mit Hilfe eines säurefesten Klebstoffes (3) mit der mikroporösen Kunststoffschicht (2) verbunden ist.

4. Separator nach einem der Ansprüche 1 bis 3, dadurch gekennzeichnet, daß das Glasfaservlies (1,11) eine Schichtdicke von weniger als o,6 mm aufweist.

5. Separator nach einem der Ansprüche 1 bis 4, dadurch gekennzeichnet, daß das Glasfaservlies (1,11) aus Fasern mit einem durchschnittlichen Durchmesser von mehr als 1o µm besteht.

6. Separator nach einem der Ansprüche 1 bis 5, dadurch gekennzeichnet, daß die Kunststoffschicht (2,12) eine Schichtdicke von weniger als o,4 mm aufweist.

7. Separator nach einem der Ansprüche 1 bis 6, dadurch gekennzeichnet, daß die Kunststoffschicht (2,12) aus Polyethylen mit einem niedrigen Schmelzindex besteht.

8. Separator nach Anspruch 7, dadurch gekennzeichnet, daß die Kunststoffschicht (2,12) aus Polyethylen einen feinteiligen porösen anorganischen Füllstoff enthält.

9. Separator nach einem der Ansprüche 1 bis 8, dadurch gekennzeichnet, daß die Kunststoffschicht (2,12) auf der jeweils der positiven Elektrodenplatte zugewandten Seite angeordnet ist.

10. Separator nach einem der Ansprüche 1 bis 9, dadurch gekennzeichnet, daß auf einer/oder beiden Seiten, insbesondere der jeweils der positiven Elektrodenplatte zugewandten Seite, Rippen (5,15) angeordnet sind.

11. Separator nach Anspruch 1, dadurch gekennzeichnet, daß das Glasfaservlies auf beiden Seiten mit einer mikroporösen Kunststoffschicht aus einem Polyolefin mit einem Porendurchmesser von weniger als 3 $\mu$m fest verbunden ist.

12. Separator nach Anspruch 1, dadurch gekennzeichnet, daß die mikroporöse Kunststoffschicht aus einem Polyolefin mit einem Porendurchmesser von weniger als 3 $\mu$m beidseitig mit einem Glasfaservlies fest verbunden ist.

13. Verfahren zur Herstellung eines versteiften mikroporösen Separators für Bleiakkumulatoren gemäß einem der Ansprüche 1 bis 12, dadurch gekennzeichnet, daß man ein Glasfaservlies (1, 11) mindestens auf einer Seite über seine gesamte Fläche mit einer mikroporösen Kunststoffschicht (2, 12) aus einem Polyolefin mit einem Porendurchmesser von weniger als 3 $\mu$m fest verbindet.

14. Verfahren nach Anspruch 13, dadurch gekennzeichnet, daß man das Glasfaservlies (11) mit der mikroporösen Kunststoffschicht (12) durch Verpressen unter Druck bei erhöhter Temperatur verbindet und es dadurch zu 5 bis 60 % seiner Schichtdicke in das Kunststoffmaterial einbettet.

0121771

15. Verfahren nach Anspruch 13, dadurch gekennzeichnet, daß man das Glasfaservlies (1) mit Hilfe eines säurefesten Klebstoffes (3) mit der mikroporösen Kunststoffschicht (2) unter Anpressen verbindet.

16. Verfahren nach einem der Ansprüche 13 bis 15, dadurch gekennzeichnet, daß man der Kunststoffschicht (2, 12) die Mikroporosität verleiht, indem man einen festen oder flüssigen Zusatz hochdispers in dem Kunststoff verteilt und anschließend mit einem geeigneten Lösungsmittel extrahiert.

17. Verfahren nach Anspruch 16, dadurch gekennzeichnet, daß man zunächst eine Kunststoffbahn extrudiert, welche den festen oder flüssigen Zusatz hochdispers enthält, und daß man die so erhaltene Bahn mit dem Glasfaservlies verbindet und danach den festen oder flüssigen Zusatz extrahiert.

18. Verfahren nach einem der Ansprüche 13 bis 18, dadurch gekennzeichnet, daß man auf einer oder beiden Seiten des Separators Rippen anbringt.

Fig. 1

Fig. 2

0121771

Fig. 3

Fig. 4

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | **EINSCHLÄGIGE DOKUMENTE** | | EP 84102406.0 |
| A | DE - C - 944 440 (FULLER) <br> * Ansprüche * <br> -- | 1,11 | H 01 M 2/16 <br> H 01 M 2/18 |
| A | DE - A1 - 2 924 239 (AMERACE) <br> * Seite 7, Zeilen 9-24 * <br> -- | 1-3,12, 13 | |
| A,D | DE - B - 1 496 123 (GRACE) <br> * Ansprüche * <br> -- | 7,8,16 | |
| A | DE - A1 - 2 822 396 (THE GATES RUBBER) <br> * Anspruch 1 * <br> -- | 1,11 | |
| A | US - A - 3 910 799 (KONDO et al.) <br> * Zusammenfassung * <br> -- | 1,9 | RECHERCHIERTE SACHGEBIETE (Int. Cl. 3) |
| A | DE - B - 1 269 212 (GRACE) <br> * Spalte 1, Zeilen 6-15 * <br> ---- | 18 | H 01 M |

Der vorliegende Recherchenbericht wurde für alle Patentansprüche erstellt.

| Recherchenort | Abschlußdatum der Recherche | Prüfer |
|---|---|---|
| WIEN | 22-06-1984 | LUX |